# EUROPEAN PATENT SPECIFICATION

(11) **EP 4 040 416 B1**
(45) Date of publication and mention of the grant of the patent: **09.12.2026**
(21) Application number: 22152104.0
(22) Date of filing: 18.01.2022
(51) Int. Cl.: G08B 29/18, H04W 60/00

(54) **MOBILE APPLICATION BASED COMMISSIONING OF BUILDING SECURITY DEVICES**
MOBILE ANWENDUNGSBASIERTE INBETRIEBNAHME VON GEBÄUDESICHERHEITSVORRICHTUNGEN
MISE EN SERVICE DE DISPOSITIFS DE SÉCURITÉ DES BÂTIMENTS BASÉE SUR APPLICATION MOBILE

(30) Priority: 05.02.2021 US 202117168827
(43) Date of publication of application: 10.08.2022
(73) Proprietor: Honeywell International Inc., Charlotte, NC 28202 (US)
(72) Inventor: KRISHNAN, C. Navaneetha, Charlotte, 28202 (US)
(74) Representative: Haseltine Lake Kempner LLP

(56) References cited:
- WO-A1-2020/162957
- US-A1- 2018 069 932
- US-B2- 10 453 329

## Description

### Technical Field

The present disclosure relates generally to commissioning of building security devices. More particularly, the present disclosure relates using a mobile application in commissioning of building security devices.

### Background

Building control systems, such as but not limited to Heating, Ventilation and/or Air Conditioning (HVAC) control systems, Lighting Control systems, Fire Alarm and/or Suppression Systems and Building Security Systems, can include a large number of building control devices installed across a facility. For example, a building security system can include a large number of security devices such as but not limited to security cameras and access control devices installed across a facility. Once each of the building control devices are installed, they need to be configured or commissioned. It will be appreciated that a large facility may include hundreds or even thousands of building security devices. Configuring each of the building security devices can be a lengthy, time-consuming process in which errors can easily occur. What would be desirable are methods and systems for using a mobile device to help configure each of the installed building security devices in a simple and less error prone manner.

US 2018/069932 A1 discloses a method of registering distributed devices includes discovering a plurality of devices at a central panel or server, localizing the devices, and authorizing the devices with a mobile device communicating with the central panel or server.

### Summary

The present disclosure relates to using a mobile application in commissioning of building security devices.

The present invention is defined by the independent claims, to which reference should now be made. Advantageous embodiments are set out in the dependent claims.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative building control system including an illustrative mobile device useful in configuring the illustrative building control system;
Figure 2 is a flow diagram showing an illustrative method of configuring a plurality of security devices;
Figure 3 is a flow diagram showing an illustrative method not covered by the invention of configuring a plurality of building control devices;
Figure 4 is a flow diagram showing an illustrative method of configuring a plurality of security devices; and
Figures 5 through 12 are screen shots showing how building control devices are configured using an illustrative mobile device.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the scope of the disclosure as defined in the appended claims.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

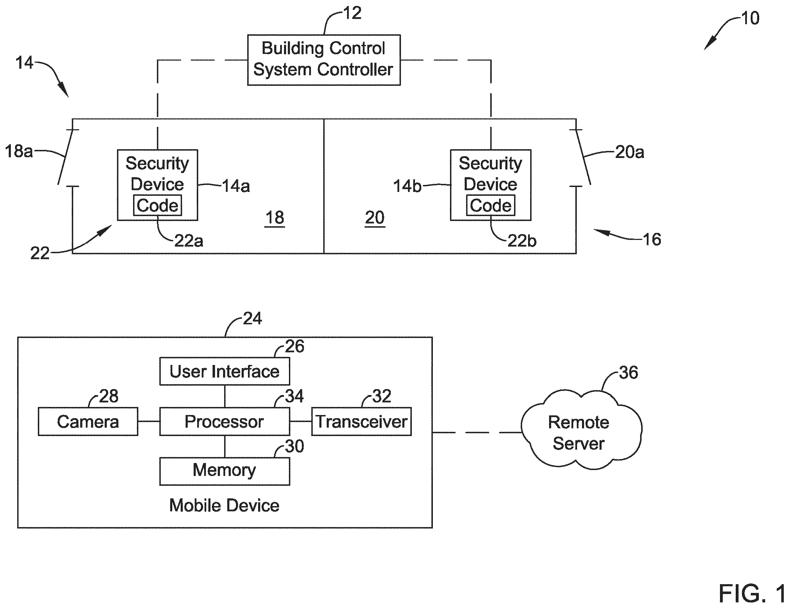

Figure 1 is a schematic block diagram of an illustrative building control system 10. While the building control system 10 may represent any suitable building control system such as a Heating, Ventilation and/or Air Conditioning (HVAC) system, a Lighting Control system, a Fire Alarm and/or Suppression System and/or a Security System with any suitable building control devices, for simplicity and clarity Figure 1 just shows security devices. Thus, Figure 1 shows an illustrative building control system 10 that includes a building control system controller 12 that is operably coupled with security devices 14. The security devices 14 are individually labeled as 14a and 14b. It will be appreciated that the building control system 10 may include any number of security devices 14, and in some cases may include a considerably greater number of security devices 14. A security device 14 may be considered as an example of a building control device. Each of the security devices 14 may independently represent a video camera. Each of the security devices 14 may independently represent an access control device. Examples of access control devices include card readers, electronic door locks and the like. The security devices 14 are shown positioned within a floor plan 16. The floor plan 16 is shown schematically, and merely includes a first room or space 18 and a second room or space 20. While only a pair of rooms 18, 20 are shown, it will be appreciated that the floor plan 16 may include additional rooms or spaces.

The room 18 includes a doorway 18a and the room 20 includes a doorway 20a. In some cases, for example, the security device 14a may be considered as being disposed at a position in which the security device 14a may be able to control access through the doorway 18a, and/or may be in a position in which the security device 14a is able to view the doorway 18a and thus can see individuals passing or attempting to pass through the doorway 18a. Similarly, the security device 14b may be considered as being disposed at a position in which the security device 14b may be able to control access through the doorway 20a, and/or may be in a position in which the security device 14b is able to view the doorway 20a and thus can see individuals passing or attempting to pass through the doorway 20a.

Before each of the security devices 14 can be put into operation, each of the security devices 14 typically need to be configured or commissioned with the building control system 10. To that end, each of the illustrative security devices 14 include a code 22, individually labeled as 22a and 22b. Each of the codes 22 may independently be a bar code, a QR code or any other code that can be scanned or entered in order to ascertain information that is represented within the code 22. The code 22 may be printed on a housing of the security device 14, for example, or the code 22 may be positioned inside of the housing, which necessitates removal of the housing to expose the code 22. The code 22 may be printed on a sticker that is disposed relative to the corresponding security device 14. In some instances, the code 22 includes information pertaining to the particular security device 14 such as but not limited to a Media Access Control (MAC) address, sometimes referred to as a physical address, of the particular security device 14. The code 22 may also include information such as device name, device model number, communication protocols and the like.

In some cases, a mobile device 24 may be used to scan the code 22 in order to obtain the information represented within the code 22. The mobile device 24 may be a tablet or smartphone, for example, and includes a user interface 26. The user interface 26 may include a display of the mobile device 24. The mobile device 24 may include a keyboard that is displayed on the display and that is touch-sensitive. The mobile device 24 may be sensitive to a person sliding their finger around the displayed keyboard, much in the way that this technique can be used when texting. The user interface 26 may include a voice interface, that allows a person to enter information by talking to the mobile device 24. The illustrative mobile device 24 includes a camera 28 that may be used to scan the code 22, for example. In some instances, the camera 28 may be considered as being part of the user interface 26, since the camera 28 may be used to provide information to the mobile device 24.

The mobile device 24 includes a memory 30 that may be used to store executable programs for execution by the mobile device 24. The memory 30 may be used to store configuration information as the configuration information is entered/scanned into the mobile device 24. Once a user uses the mobile device 24 to scan the code 22, and the mobile device 24 receives/decodes the configuration information that is represented within the code 22, the mobile device 24 may display one or more screens that allow the user to enter additional configuration information into the mobile device 24. The information represented within the code 22 may be referred to as being first configuration information while the information subsequently entered by the user may be referred to as being second configuration information.

The illustrative mobile device 24 includes a transceiver 32 that allows the mobile device 24 to communicate with other devices. The transceiver 32 may be configured to allow the mobile device 24 to communicate over cellular networks, for example. In some cases, the transceiver 32 may also be configured to communicate via other wireless communication protocols, such as but not limited to Bluetooth and/or Wi-Fi. The transceiver 32 may represent two or more distinct transceivers, each configured to communicate via a different wireless communication protocol. The illustrative mobile device 24 includes a processor 34 that is operably coupled with the user interface 26, the camera 28, the memory 30 and the transceiver 32. While shown as a single processor 34, it will be appreciated that in some cases the mobile device 24 may have two or more distinct processors 34. The processor 34 may be configured to execute an executable application that is stored in the memory 30, and that allows the mobile device 24 to scan the codes 22, for example, and to display appropriate screens that allow the user to enter additional (e.g. second) configuration information.

In some cases, the transceiver 32 allows the mobile device 24 to communicate with one or more of the security devices 14. In some instances, the transceiver 32 allows the mobile device 23 to communicate with a remote server 36. The remote server 36 may be cloud-based, for example, and may represent one or more distinct servers or other computing resources. The remote server 36 may communicate with the building control system controller 12, for example, and thus may be able to download information to the building control system controller 12 and/or to upload information from the building control system controller 12. The remote server 36 may be configured to receive either directly or indirectly all of the configuration information, such as the first configuration information and the second configuration information, pertaining to each of the security devices 14 from the mobile device 24.

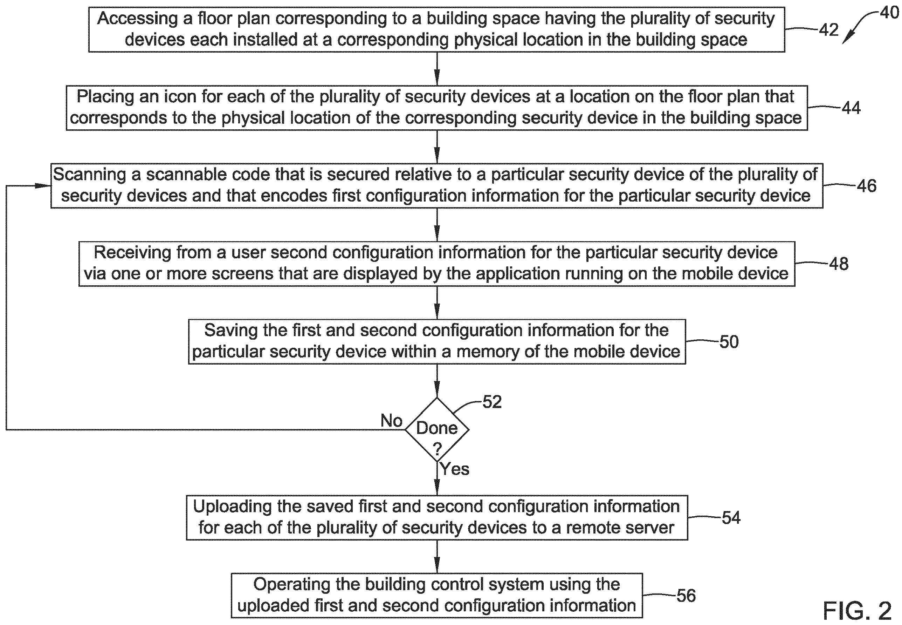

Figure 2 is a flow diagram showing an illustrative method 40 of configuring a plurality of security devices (such as the security devices 14) of a building control system (such as the building control system 10) using an application running on a mobile device (such as the mobile device 24. An application on the mobile device is used to access a floor plan corresponding to a building space having the plurality of security devices each installed at a corresponding physical location in the building space, the plurality of security devices awaiting configuration, as indicated at block 42. Using the application on the mobile device to access a floor plan may include scanning or taking a photo of an available copy of the floor plan using a camera (such as the camera 28) of the mobile device. Using the application on the mobile device to access a floor plan may include downloading the floor plan from a remote source. In some instances, the floor plan may itself be programmed into the application running on the mobile device.

In some cases, using the application on the mobile device to access a floor plan may also include accessing a list of security devices installed in the building along with corresponding icons for each of the security devices included in the list of security devices. The application is informed of a relative position of each of the plurality of security devices within the building space by placing an icon for each of the plurality of security devices at a location on the floor plan that corresponds to the physical location of the corresponding security device in the building space, as indicated at block 44. This may include dragging each icon from the list of security devices and dropping the icon at a location on the floor plan that corresponds to the physical location of the corresponding security device in the building space. In some cases, the location of the icons for at least some of the security devices may be pre-placed at locations on the floor plan in accordance with a predefined design specification for the building. When so provided, and in some cases, the user of the mobile device may be allowed to move the icons from their pre-placed locations on the floor plan as necessary to match the actual installation location of the corresponding security devices in the building.

A scannable code secured relative to a particular security device of the plurality of security devices is scanned using the mobile device (e.g. via the camera 28). The scannable code encodes first configuration information for the particular security device, as indicated at block 46. This may include removing a cover of the particular security device in order to access the scannable code. In some cases, the scannable code may be a bar code or a QR code that is scannable by the camera 28 of the mobile device. The first configuration information that is encoded by the scannable code may include, for example, a unique identifier that uniquely identifies the particular security device. The first configuration information that is encoded by the scannable code may include, for example, one or more of a Media Access Control (MAC) address for the particular security device, model information for the particular security device, and/or any other suitable configuration information.

Second configuration information for the particular security device may be received from a user via one or more screens that are displayed by the application running on the mobile device, as indicated at block 48. In some cases, the second configuration information may include a network address (e.g. IP address) for the particular security device. The first and second configuration information for the particular security device are saved within a memory of the mobile device, as indicated at block 50.

At decision block 52, a determination is made as to whether all of the security devices have been configured. This determination may be made by the user, for example. If not, control reverts back to block 46 and the process continues. However, if at decision block 52 the determination is made that all of the security devices have been configured, control passes to block 54, where the saved first and second configuration information for each of the plurality of security devices is uploaded to a remote server (such as the remote server 36). The scanning step (block 46), the receiving step (block 48) and the saving step (block 50) may be performed for each of the security devices before the remote server 36 is online or is otherwise available to receive the upload of the first and second configuration information. The building control system is subsequently operated using the uploaded first and second configuration information, as indicated at block 56.

In some cases, receiving from the user the second configuration information may include soliciting from the user second configuration information needed to configure the particular security device via one or more screens that are displayed by the application running on the mobile device, and accepting from the user at least some of the solicited information via one or more screens that are displayed by the application running on the mobile device. At least some of the security devices may include security cameras and access control devices. The plurality of security devices installed within the building space are divided into a plurality of groups, with a different user assigned to each group, wherein each user uses a different mobile device for configuring each of the security devices within their assigned group, and the different users uploading their saved first and second configuration information for each of the security devices in their assigned group to the remote server.

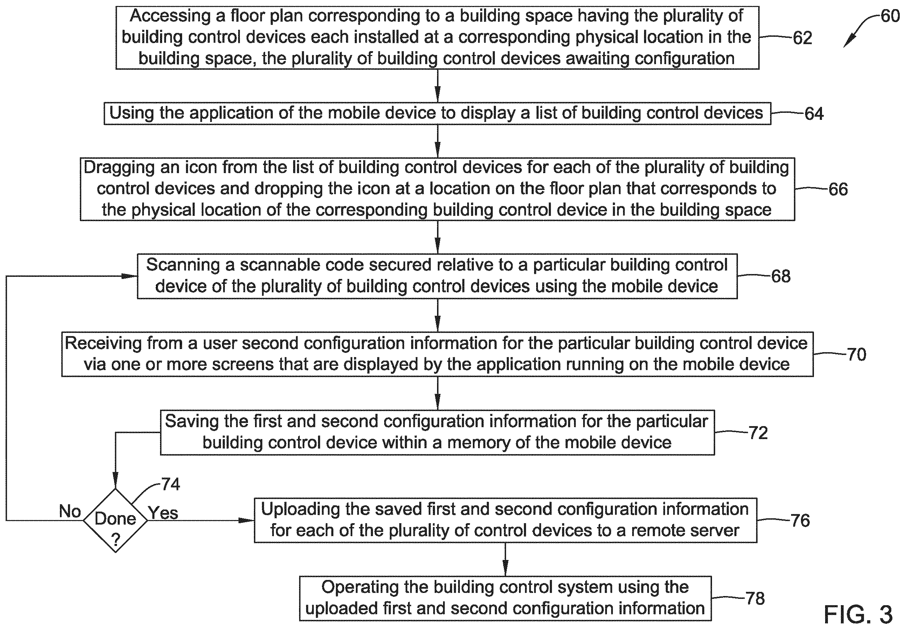

Figure 3 is a flow diagram showing an illustrative method 60 of configuring a plurality of building control devices of a building control system using an application running on a mobile device. The illustrative method 60 includes using the application on the mobile device to access a floor plan corresponding to a building space having the plurality of building control devices each installed at a corresponding physical location in the building space, the plurality of building control devices awaiting configuration, as indicated at block 62. The application of the mobile device is used to display a list of building control devices, as indicated at block 64. The application is informed of a relative position of each of the plurality of building control devices within the building space by a user dragging an icon from the list of building control devices for each of the plurality of building control devices and dropping the icon at a location on the floor plan that corresponds to the physical location of the corresponding building control device in the building space, as indicated at block 66. In some cases, the location of the icons for at least some of the building control devices may be pre-placed at locations on the floor plan in accordance with a predefined design specification for the building. When so provided, and in some cases, the user of the mobile device may be allowed to move the icons from their pre-placed locations on the floor plan as necessary to match the actual installation location of the corresponding building control devices in the building.

A scannable code secured relative to a particular building control device of the plurality of building control devices is scanned using the mobile device (e.g. camera 28). The scannable code encodes first configuration information for the particular building control device, as indicated at block 68. The first configuration information may include unique identifier that uniquely identifies the particular building control device. The first configuration information may include one or more of a Media Access Control (MAC) address for the particular building control device, model information for the particular building control device and/or any other suitable configuration information.

Second configuration information for the particular building control device may be received from a user via one or more screens that are displayed by the application running on the mobile device, as indicated at block 70. In some cases, the second configuration information may include a network address (e.g. IP address) for the particular building control device. The first and second configuration information for the particular building control device are saved within a memory of the mobile device, as indicated at block 72.

At decision block 74, a determination is made as to whether all of the building control devices have been configured. This determination may be made by the user, for example. If not, control reverts back to block 68 and the process continues. However, if at decision block 74 the determination is made that all of the building control devices have been configured, control passes to block 76, where the saved first and second configuration information for each of the plurality of building control devices is uploaded to a remote server (such as the remote server 36). The building control system is subsequently operated using the uploaded first and second configuration information, as indicated at block 78.

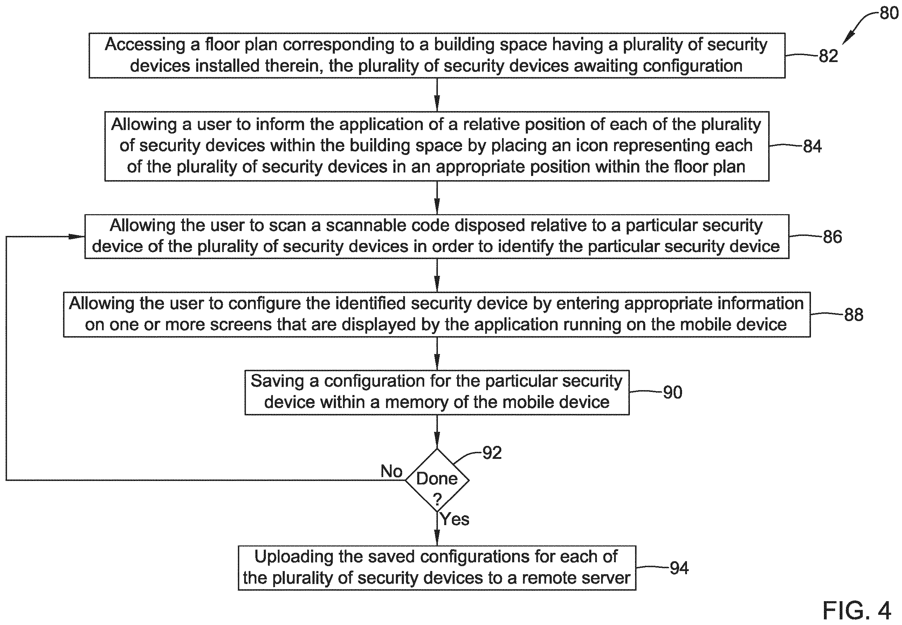

Figure 4 is a flow diagram showing an illustrative method 80. The illustrative method 80 includes accessing a floor plan corresponding to a building space having a plurality of security devices installed therein, the plurality of security devices awaiting configuration, as indicated at block 82. A user is allowed to inform the application of a relative position of each of the plurality of security devices within the building space by placing an icon representing each of the plurality of security devices in an appropriate position within the floor plan, as indicated at block 84. The user is allowed to scan a scannable code disposed relative to a particular security device of the plurality of security devices in order to identify the particular security device, as indicated at block 86. The user is allowed to configure the identified security device by entering appropriate information on one or more screens that are displayed by the application running on the mobile device, as indicated at block 88. A configuration for the particular security device is saved within a memory of the mobile device, as indicated at block 90.

At decision block 92, a determination is made as to whether all of the security devices have been configured. This determination may be made by the user, for example. If not, control reverts back to block 86 and the process continues. However, if at decision block 92 the determination is made that all of the security devices have been configured, control passes to block 94, where the saved first and second configuration information for each of the plurality of security devices is uploaded to a remote server (such as the remote server 36).

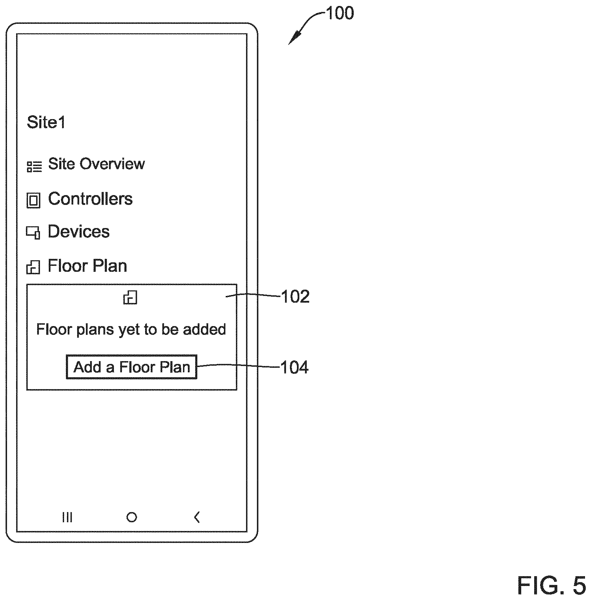

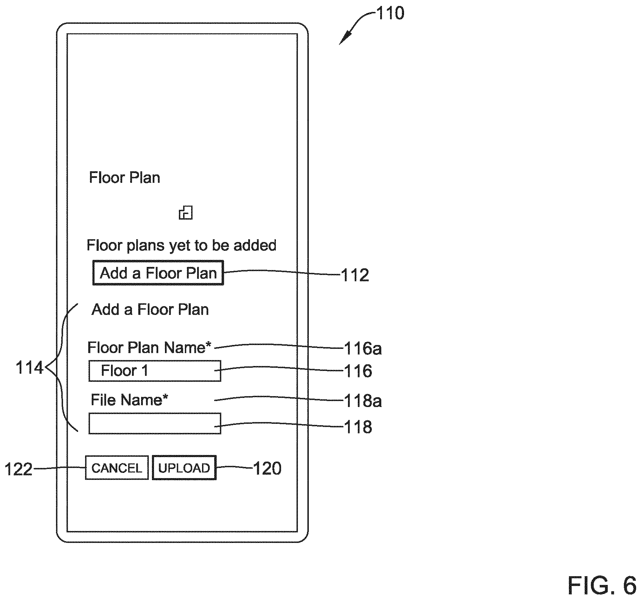

Figures 5 through 12 provide screen shots that illustrate the use of an application running on a mobile device to configure a plurality of security devices. Figure 5 provides an illustrative screen shot of a screen 100 that includes a site overview informing a user via a popup 102 that no floor plan has been added yet. The popup 102 includes an ADD A FLOOR PLAN button 104 that a user can select in order to add a floor plan. Pressing the ADD A FLOOR PLAN button 104 causes the mobile device to display an illustrative screen 110, as seen in Figure 6.

Figure 6 shows the screen 110, which allows the user to add a floor plan via an ADD A FLOOR PLAN button 112. The screen 110 includes an Add floor plan section 114 that the user can use to inform the mobile device which floor plan to add. The Add floor plan section 114 includes a box 116 for adding a floor plan name and a box 118 for adding a file name that corresponds to the floor plan that was named in the box 116. The Add floor plan section 114 includes a box 116a that informs the user what should be entered into the box 116. The Add floor plan section 114 also includes a box 118a that informs the user what should be entered into the box 118. Once the user has entered the name of the floor plan into box 116 and the file name corresponding to that floor plan into box 118, the user can select an UPLOAD button 120. Selecting the UPLOAD button 120 will cause the application running on the mobile device to upload the named floor plan to the mobile device. Selecting a CANCEL button 122 will cancel the operation of uploading a floor plan.

Although not shown in Figure 6, in some cases the screen 110 may prompt a user to take a picture of a floorplan using the camera 28 of the mobile device, resulting in a corresponding floorplan image file being stored on the mobile device. In some cases, box 118 of Figure 6 may be automatically populated with the name of the corresponding floorplan image file.

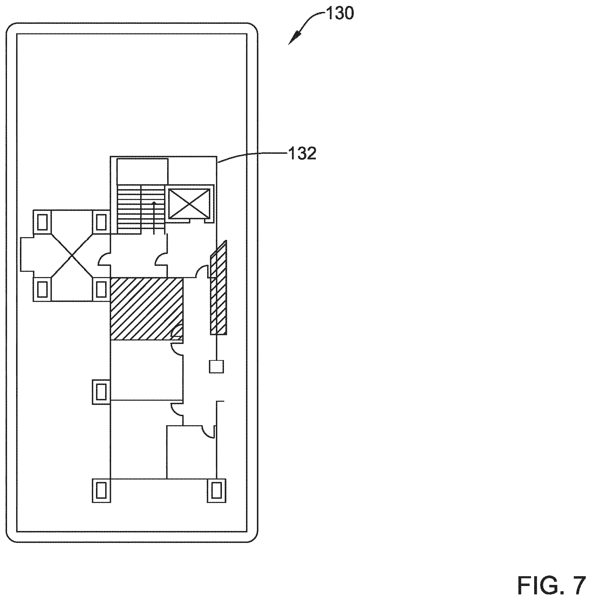

Figure 7 provides an illustrative screen shot showing a screen 130 that can be displayed by the mobile device after uploading a floor plan (as in Figure 6). The screen 130 includes a floor plan 132 that is displayed by the mobile device. Once the floor plan has been uploaded, the user can proceed with placing icons on the floor plan at positions that correspond to the actual positions of the security devices within the space represented by the floor plan. The user may select a particular icon on the floor plan, and once selected, scan a scannable code on the corresponding security device in order to obtain first configuration information regarding the particular security device, and then the user can subsequently enter additional or second configuration information for the particular security device. This may be done for each of the security devices 14a and 14b.

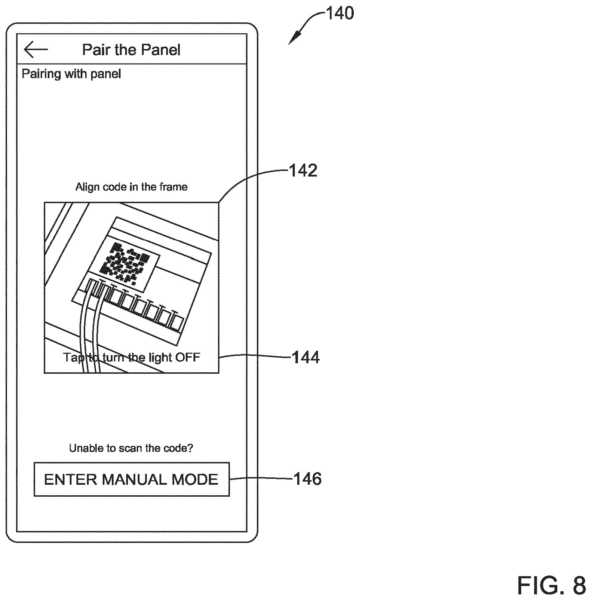

Figure 8 provides an illustrative screen shot showing a screen 140 that shows scanning a scannable code for a particular security device. The screen 140 includes a frame 142 in which the user is to align an image of the scannable code that is provided by a camera 28 of the mobile device. The scannable code may be on the outside of the particular security device. In some cases, the scannable code may be in an interior of the particular security device, requiring temporarily removing or otherwise opening a cover of the particular security device in order to expose the scannable code. In the particular example shown in Figure 8, the scannable code is a QR code. The user can move the mobile device around in order to align the image within the frame 142, for example. Once the image is aligned with the frame 142, the mobile device captures the image of the QR code and decodes the information that is represented by the QR code. This makes up at least a portion of the first configuration information. In some cases, the user may be able to manually select when to capture the image.

The screen 140 also includes a message 144 that provides the user with an option to turn off the camera flash of the mobile device by tapping an appropriate location on the screen 140. The screen 140 also includes an ENTER MANUAL MODE button 146. The user can select the ENTER MANUAL MODE button 146 if they are having trouble capturing an image of the QR code. This may occur if the QR code is partially obscured, or has a crease in it or is dirty. This may also occur if the camera flash is not functioning and the QR code is located in a relatively dark environment, for example. Selecting the ENTER MANUAL MODE button 146 may permit the user to manually enter the information that would otherwise have been captured by scanning the QR code.

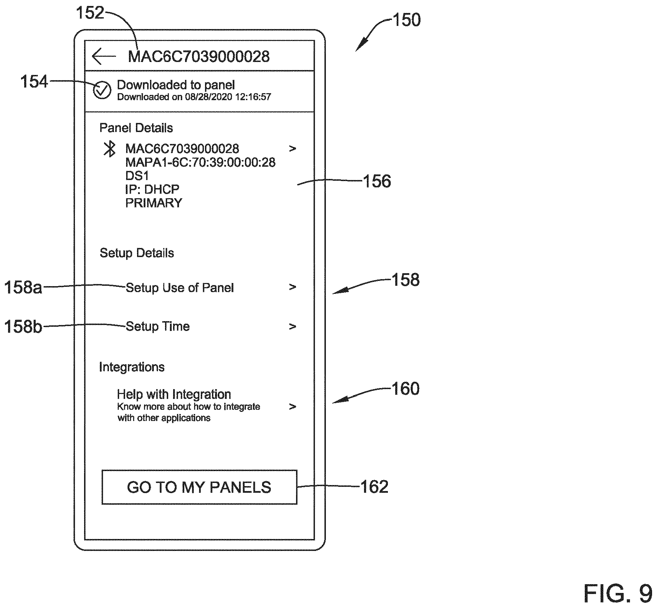

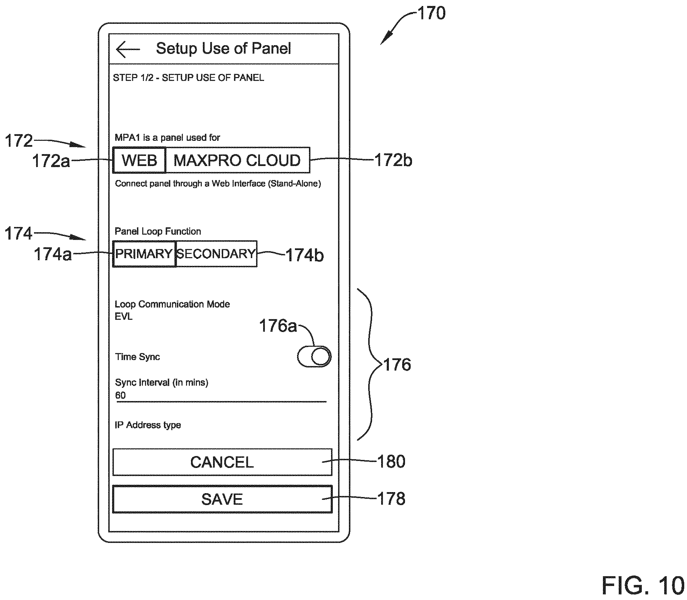

Figure 9 provides an illustrative screen shot showing a screen 150 that provides the user with options for configuring a security panel, which may be considered as being an example of a security device. A MAC address 152 of the security panel is displayed at the top of the screen 150, as well as a message 154 indicating that information has been successfully downloaded/scanned from the security panel. The screen 150 includes a section 156 that includes additional information about the selected security panel. The screen 150 includes a Setup Details section 158 having a Setup Use of Panel menu 158a and a Setup Time menu 158b. The screen 150 includes an Integrations menu 160 as well as a GO TO MY PANELS button 162. Selecting an appropriate option under the Setup Use of Panel menu 158a causes the mobile device to display a screen 170, as seen in Figure 10.

Figure 10 provides an illustrative screen shot showing the screen 170 that provides the user with additional options for configuring the security panel. The screen 170 includes a connection section 172 that has a WEB option 172a and a MAXPRO CLOUD option 174. In this example, the WEB option 172a has been selected. For this particular security panel, the screen 170 includes a Panel Loop Function section 174 that has a PRIMARY option 174a and a SECONDARY option 174b. In this example, the PRIMARY option 174a has been selected. The screen 170 includes a section 176 that identifies a loop communication mode, and has an ON/OFF radio button 176a pertaining to a time sync setting. In this example, the radio button 176a is set to ON. A SAVE button 178, if selected, instructs the mobile device to save the settings that have been selected. A CANCEL button 180, if selected, cancels the operation and will cause the mobile device to revert to a previous screen. This information may be considered part of the second configuration information collected by the user.

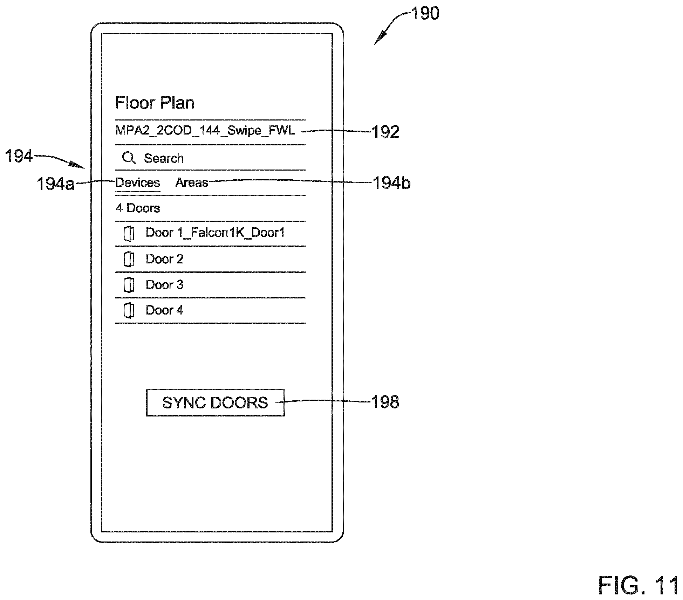

Figure 11 provides an illustrative screen shot showing a screen 190 that shows several devices having been added to an uploaded floor plan. The name of the floor plan is shown at 192. The screen 190 includes an options bar 194 having a DEVICES option 194a and an AREAS option 194b. In this example, the DEVICES option 194a has been selected. The screen 190 includes a list 196 of installed security door devices that correspond to the selected and uploaded floor plan. The screen 190 includes a SYNC DOORS button 198 that, if selected, instructs the mobile device to upload the saved configurations to the remote server.

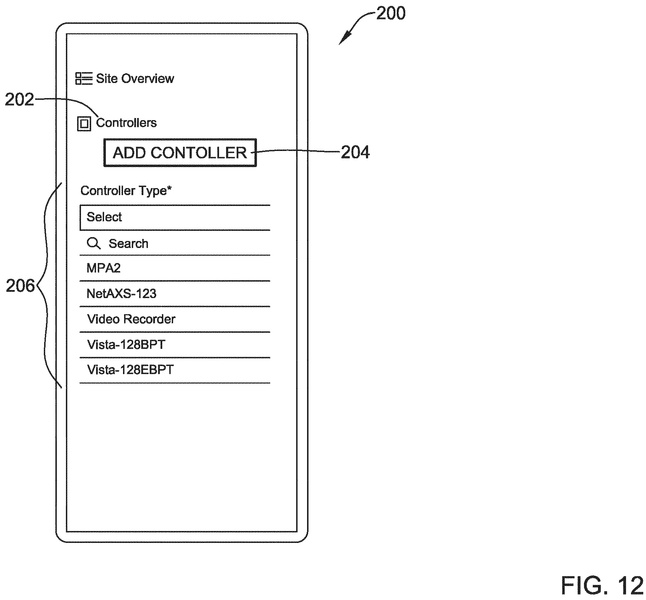

Figure 12 provides an illustrative screen shot showing a screen 200 that provides a user an opportunity to add and configure a controller. The screen 200 includes an ADD CONTROLLER button 204 under a Controller tab 202. The screen 200 includes a section 206 that enables the user to make one or more appropriate selections for the particular controller they are adding.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of configuring a plurality of security devices (14, 14a, 14b) of a building control system (10) using an application running on a mobile device (23, 24), the method comprising:
using the application on the mobile device (23, 24) to access a floor plan (16, 132) corresponding to a building space having the plurality of security devices (14, 14a, 14b) each installed at a corresponding physical location in the building space, the plurality of security devices (14, 14a, 14b) awaiting configuration;
allowing a user to inform the application of a relative position of each of the plurality of security devices (14, 14a, 14b) within the building space by placing an icon for each of the plurality of security devices (14, 14a, 14b) at a location on the floor plan (16, 132) that corresponds to the physical location of the corresponding security device (14, 14a, 14b) in the building space;
allowing the user to scan a scannable code (22) secured relative to a particular security device (14, 14a, 14b) of the plurality of security devices (14, 14a, 14b) using the mobile device (23, 24), the scannable code (22) encoding first configuration information for the particular security device (14, 14a, 14b);
allowing the user to configure the particular security device (14, 14a, 14b) by entering second configuration information for the particular security device (14, 14a, 14b) via one or more screens that are displayed by the application running on the mobile device (23, 24), wherein the second configuration information includes additional options for configuring the particular security device (14, 14a, 14b) in addition to the first configuration information and the location of the particular security device (14, 14a, 14b) on the floor plan (16, 132);
saving the first and second configuration information for the particular security device (14, 14a, 14b) within a memory (30) of the mobile device (23, 24);
repeating the scanning, receiving and saving steps for each of the plurality of security devices (14, 14a, 14b);
uploading the saved first and second configuration information for each of the plurality of security devices (14, 14a, 14b) to a remote server (36);
wherein the plurality of security devices (14, 14a, 14b) installed within the building space are divided into a plurality of groups, with a different user assigned to each group, wherein each user is assigned a different mobile device (23, 24) for configuring the security devices (14, 14a, 14b) within their assigned group, and the different mobile devices (23, 24) uploading their saved first and second configuration information for each of the security devices (14, 14a, 14b) in their assigned group to the remote server (36);
allowing the user to perform the scanning, configuring and saving steps for each of the plurality of security devices (14, 14a, 14b) before the remote server (36) is available to receive the first and second configuration information; and
operating the building control system (10) using the uploaded first and second configuration information.

2. The method of claim 1, wherein using the application on the mobile device (23, 24) to access a floor plan (16, 132) comprises scanning or taking a photo of an available copy of the floor plan (16, 132) using a camera (28) of the mobile device (23, 24).

3. The method of claim 1, wherein using the application on the mobile device (23, 24) to access a floor plan (16, 132) comprises downloading the floor plan (16, 132) from a remote source.

4. The method of claim 1, wherein the floor plan (16, 132) is programmed into the application running on the mobile device (23, 24).

5. The method of claim 1, wherein using the application on the mobile device (23, 24) to access a floor plan (16, 132) further comprises accessing a list (196) of security devices (14, 14a, 14b) installed in the building space along with corresponding icons for each of the security devices (14, 14a, 14b) included in the list (196) of security devices (14, 14a, 14b).

6. The method of claim 5, wherein informing the application of the relative position of each of the plurality of security devices (14, 14a, 14b) within the building space comprises dragging each icon from the list (196) of security devices (14, 14a, 14b) and dropping the icon at a location on the floor plan (16, 132) that corresponds to the physical location of the corresponding security device (14, 14a, 14b) in the building space.

7. The method of claim 1, wherein allowing the user to scan the scannable code (22) secured relative to the particular security device (14, 14a, 14b) further comprises removing a cover of the particular security device (14, 14a, 14b) in order to access the scannable code (22).

8. The method of claim 1, wherein the scannable code (22) comprises a bar code (22) or a QR code (22) that is scannable by a camera (28) of the mobile device (23, 24).

9. The method of claim 1, wherein the first configuration information encoded by the scannable code (22) comprises a unique identifier that uniquely identifies the particular security device (14, 14a, 14b).

10. The method of claim 1, wherein the first configuration information encoded by the scannable code (22) comprises one or more of a Media Access Control, MAC, address for the particular security device (14, 14a, 14b) and model information for the particular security device (14, 14a, 14b).

11. The method of claim 10, wherein the second configuration information comprises a network address for the particular security device (14, 14a, 14b).

12. The method of claim 1, wherein allowing the user to configure the particular security device (14, 14a, 14b) by entering the second configuration information for the particular security device (14, 14a, 14b) comprises:
soliciting from the user the second configuration information needed to configure the particular security device (14, 14a, 14b) via one or more screens that are displayed by the application running on the mobile device (23, 24); and
accepting from the user at least some of the solicited second configuration information via one or more screens that are displayed by the application running on the mobile device (23, 24).

13. A non-transient, computer-readable storage medium having stored thereon instructions that when executed by one or more processors (34) of a mobile device (23, 24) cause the mobile device (23, 24) to:
access a floor plan (16, 132) corresponding to a building space having a plurality of security devices (14, 14a, 14b) installed therein, the plurality of security devices (14, 14a, 14b) awaiting configuration;
allow a user to inform the application of a relative position of each of the plurality of security devices (14, 14a, 14b) within the building space by placing an icon representing each of the plurality of security devices (14, 14a, 14b) in an appropriate position within the floor plan (16, 132);
allow the user to scan a scannable code (22) disposed relative to a particular security device (14, 14a, 14b) of the plurality of security devices (14, 14a, 14b), the scannable code (22) encoding first configuration information for the particular security device (14, 14a, 14b);
allow the user to configure the identified security device (14, 14a, 14b) by entering second configuration information on one or more screens that are displayed by the application running on the mobile device (23, 24), wherein the second configuration information includes additional options for the identified security device (14, 14a, 14b) in addition to the first configuration information and the relative position of the identified security device (14, 14a, 14b) within the building space;
save the first and second configuration information for the particular security device (14, 14a, 14b) within a memory (30) of the mobile device (23, 24);
repeat the scanning, configuring and saving steps for each of the plurality of security devices (14, 14a, 14b);
upload the saved configurations for each of the plurality of security devices (14, 14a, 14b) to a remote server (36);
wherein the plurality of security devices (14, 14a, 14b) installed within the building space are divided into a plurality of groups, with a different user assigned to each group, wherein each user is assigned a different mobile device (23, 24) for configuring the security devices (14, 14a, 14b) within their assigned group, and the different mobile devices (23, 24) uploading their saved first and second configuration information for each of the security devices (14, 14a, 14b) in their assigned group to the remote server (36); and
allow the user to perform the informing, scanning, configuring and saving steps for each of the plurality of security devices (14, 14a, 14b) in each of the plurality of groups before the remote server (36) is available.

## Patentansprüche

1. Verfahren zum Konfigurieren einer Vielzahl von Sicherheitsvorrichtungen (14, 14a, 14b) eines Gebäudesteuersystems (10) unter Verwendung einer Anwendung, die auf einer mobilen Vorrichtung (23, 24) läuft, das Verfahren umfassend:
Verwenden der Anwendung auf der mobilen Vorrichtung (23, 24), um auf einen Grundriss (16, 132) zuzugreifen, der einer Gebäudefläche entspricht, die die Vielzahl von Sicherheitsvorrichtungen (14, 14a, 14b) aufweist, die jeweils an einem entsprechenden physischen Ort in der Gebäudefläche installiert sind, wobei die Vielzahl von Sicherheitsvorrichtungen (14, 14a, 14b) für eine Konfiguration bereit sind;
Ermöglichen, dass ein Benutzer die Anwendung durch Platzieren eines Icons für jede der Vielzahl von Sicherheitsvorrichtungen (14, 14a, 14b) an einem Ort des Grundrisses (16, 132), der dem physischen Ort der entsprechenden Sicherheitsvorrichtung (14, 14a, 14b) in der Gebäudefläche entspricht, über eine relative Position jeder der Vielzahl von Sicherheitsvorrichtungen (14, 14a, 14b) innerhalb der Gebäudefläche informiert;
Ermöglichen, dass der Benutzer einen scanbaren Code (22), der relativ zu einer jeweiligen Sicherheitsvorrichtung (14, 14a, 14b) der Vielzahl von Sicherheitsvorrichtungen (14, 14a, 14b) angebracht ist, unter Verwendung der mobilen Vorrichtung (23, 24) scannt, wobei der scanbare Code (22) erste Konfigurationsinformationen für die jeweilige Sicherheitsvorrichtung (14, 14a, 14b) kodiert;
Ermöglichen, dass der Benutzer die jeweilige Sicherheitsvorrichtung (14, 14a, 14b) durch Eingeben von zweiten Konfigurationsinformationen für die jeweilige Sicherheitsvorrichtung (14, 14a, 14b) über einen oder mehrere Bildschirme konfiguriert, die durch die auf der mobilen Vorrichtung (23, 24) laufende Anwendung angezeigt werden, wobei die zweiten Konfigurationsinformationen zusätzliche Optionen zum Konfigurieren der jeweiligen Sicherheitsvorrichtung (14, 14a, 14b) zusätzlich zu den ersten Konfigurationsinformationen und den Ort der jeweiligen Sicherheitsvorrichtung (14, 14a, 14b) auf dem Grundriss (16, 132) beinhalten;
Speichern der ersten und der zweiten Konfigurationsinformationen für die jeweilige Sicherheitsvorrichtung (14, 14a, 14b) innerhalb eines Speichers (30) der mobilen Vorrichtung (23, 24);
Wiederholen der Schritte des Scannens, Empfangens und Speicherns für jede der Vielzahl von Sicherheitsvorrichtungen (14, 14a, 14b);
Hochladen der gespeicherten ersten und zweiten Konfigurationsinformationen für jede der Vielzahl von Sicherheitsvorrichtungen (14, 14a, 14b) auf einen entfernten Server (36);
wobei die Vielzahl von Sicherheitsvorrichtungen (14, 14a, 14b), die innerhalb der Gebäudefläche installiert sind, in eine Vielzahl von Gruppen aufgeteilt sind, wobei jeder Gruppe ein unterschiedlicher Benutzer zugewiesen ist, wobei jeder Benutzer einer unterschiedlichen mobilen Vorrichtung (23, 24) zum Konfigurieren der Sicherheitsvorrichtungen (14, 14a, 14b) innerhalb ihrer zugewiesenen Gruppe zugewiesen ist, und die unterschiedlichen mobilen Vorrichtungen (23, 24) ihre gespeicherten ersten und zweiten Konfigurationsinformationen für jede der Sicherheitsvorrichtungen (14, 14a, 14b) in ihrer zugewiesenen Gruppe auf den entfernten Server (36) hochladen;
Ermöglichen, dass der Benutzer die Schritte des Scannens, Konfigurierens und Speicherns für jede der Vielzahl von Sicherheitsvorrichtungen (14, 14a, 14b) durchführt, bevor der entfernte Server (36) dafür verfügbar ist, die ersten und zweiten Konfigurationsinformationen zu empfangen; und
Betreiben des Gebäudesteuersystems (10) unter Verwendung der hochgeladenen ersten und zweiten Konfigurationsinformationen.

2. Verfahren nach Anspruch 1, wobei das Verwenden der Anwendung auf der mobilen Vorrichtung (23, 24), um auf einen Grundriss (16, 132) zuzugreifen, das Scannen oder Aufnehmen eines Fotos einer verfügbaren Kopie des Grundrisses (16, 132) unter Verwendung einer Kamera (28) der mobilen Vorrichtung (23, 24) umfasst.

3. Verfahren nach Anspruch 1, wobei das Verwenden der Anwendung auf der mobilen Vorrichtung (23, 24), um auf einen Grundriss (16, 132) zuzugreifen, das Herunterladen des Grundrisses (16, 132) von einer entfernten Quelle umfasst.

4. Verfahren nach Anspruch 1, wobei der Grundriss (16, 132) in die auf der mobilen Vorrichtung (23, 24) laufende Anwendung programmiert ist.

5. Verfahren nach Anspruch 1, wobei das Verwenden der Anwendung auf der mobilen Vorrichtung (23, 24), um auf einen Grundriss (16, 132) zuzugreifen, ferner das Zugreifen auf eine Liste (196) von Sicherheitsvorrichtungen (14, 14a, 14b), die in der Gebäudefläche installiert sind, zusammen mit entsprechenden Icons für jede der Sicherheitsvorrichtungen (14, 14a, 14b), die in der Liste (196) von Sicherheitsvorrichtungen (14, 14a, 14b) beinhaltet ist, umfasst.

6. Verfahren nach Anspruch 5, wobei das Informieren der Anwendung über die relative Position jeder der Vielzahl von Sicherheitsvorrichtungen (14, 14a, 14b) innerhalb der Gebäudefläche das Ziehen jedes Icons aus der Liste (196) von Sicherheitsvorrichtungen (14, 14a, 14b) und das Ablegen des Icons an einem Ort auf dem Grundriss (16, 132), der dem physischen Ort der entsprechenden Sicherheitsvorrichtung (14, 14a, 14b) in der Gebäudefläche entspricht, umfasst.

7. Verfahren nach Anspruch 1, wobei das Ermöglichen, dass der Benutzer den scanbaren Code (22), der relativ zu der jeweiligen Sicherheitsvorrichtung (14, 14a, 14b) angebracht ist, scannt, ferner das Entfernen einer Abdeckung der jeweiligen Sicherheitsvorrichtung (14, 14a, 14b) umfasst, um auf den scanbaren Code (22) zuzugreifen.

8. Verfahren nach Anspruch 1, wobei der scanbare Code (22) einen Barcode (22) oder einen QR-Code (22) umfasst, der durch eine Kamera (28) der mobilen Vorrichtung (23, 24) scanbar ist.

9. Verfahren nach Anspruch 1, wobei die ersten Konfigurationsinformationen, die durch den scanbaren Code (22) kodiert sind, einen eindeutigen Identifikator umfassen, die die jeweilige Sicherheitsvorrichtung (14, 14a, 14b) eindeutig identifiziert.

10. Verfahren nach Anspruch 1, wobei die ersten Konfigurationsinformationen, die durch den scanbaren Code (22) kodiert sind, eines oder mehrere von einer Medienzugriffssteuerung, MAC,-Adresse für die jeweilige Sicherheitsvorrichtung (14, 14a, 14b) und Modellinformationen für die jeweilige Sicherheitsvorrichtung (14, 14a, 14b) umfassen.

11. Verfahren nach Anspruch 10, wobei die zweiten Konfigurationsinformationen eine Netzwerkadresse für die jeweilige Sicherheitsvorrichtung (14, 14a, 14b) umfassen.

12. Verfahren nach Anspruch 1, wobei das Ermöglichen, dass der Benutzer die jeweilige Sicherheitsvorrichtung (14, 14a, 14b) durch Eingeben der zweiten Konfigurationsinformationen für die jeweilige Sicherheitsvorrichtung (14, 14a, 14b) konfiguriert, Folgendes umfasst:
Anfordern, von dem Benutzer, der zweiten Konfigurationsinformationen, die zum Konfigurieren der jeweiligen Sicherheitsvorrichtung (14, 14a, 14b) benötigt werden, über einen oder mehrere Bildschirme, die durch die auf der mobilen Vorrichtung (23, 24) laufenden Anwendung angezeigt werden; und
Akzeptieren, von dem Benutzer, mindestens einiger der angeforderten zweiten Konfigurationsinformationen über einen oder mehrere Bildschirme, die durch die auf der mobilen Vorrichtung (23, 24) laufenden Anwendung angezeigt werden.

13. Nicht flüchtiges, computerlesbares Speichermedium, das darauf gespeicherte Anweisungen aufweist, die, wenn sie von einem oder mehreren Prozessoren (34) einer mobilen Vorrichtung (23, 24) ausgeführt werden, die mobile Vorrichtung (23, 24) dazu veranlassen:
auf einen Grundriss (16, 132) zuzugreifen, der einer Gebäudefläche entspricht, die eine Vielzahl von darin installierten Sicherheitsvorrichtungen (14, 14a, 14b) aufweist, wobei die Vielzahl von Sicherheitsvorrichtungen (14, 14a, 14b) bereit für eine Konfiguration sind;
zu ermöglichen, dass ein Benutzer die Anwendung durch Platzieren eines Icons, das jede der Vielzahl von Sicherheitsvorrichtungen (14, 14a, 14b) an einer passenden Position innerhalb des Grundrisses (16, 132) darstellt, über eine relative Position jeder der Vielzahl von Sicherheitsvorrichtungen (14, 14a, 14b) innerhalb der Gebäudefläche informiert;
zu ermöglichen, dass der Benutzer einen scanbaren Code (22) scannt, der relativ zu einer jeweiligen Sicherheitsvorrichtung (14, 14a, 14b) der Vielzahl von Sicherheitsvorrichtungen (14, 14a, 14b) angeordnet ist, wobei der scanbare Code (22) erste Konfigurationsinformationen für die jeweilige Sicherheitsvorrichtung (14, 14a, 14b) kodiert;
zu ermöglichen, dass der Benutzer die identifizierte Sicherheitsvorrichtung (14, 14a, 14b) durch Eingeben von zweiten Konfigurationsinformationen auf einem oder mehreren Bildschirmen konfiguriert, die durch die auf der mobilen Vorrichtung (23, 24) laufende Anwendung angezeigt werden, wobei die zweiten Konfigurationsinformationen zusätzliche Optionen für die identifizierte Sicherheitsvorrichtung (14, 14a, 14b) zusätzlich zu den ersten Konfigurationsinformationen und die relative Position der identifizierten Sicherheitsvorrichtung (14, 14a, 14b) innerhalb der Gebäudefläche beinhalten;
die ersten und die zweiten Konfigurationsinformationen für die jeweilige Sicherheitsvorrichtung (14, 14a, 14b) innerhalb eines Speichers (30) der mobilen Vorrichtung (23, 24) zu speichern;
die Schritte des Scannens, Konfigurierens und Speicherns für jede der Vielzahl von Sicherheitsvorrichtungen (14, 14a, 14b) zu wiederholen;
die gespeicherten Konfigurationen für jede der Vielzahl von Sicherheitsvorrichtungen (14, 14a, 14b) auf einen entfernten Server (36) hochzuladen;
wobei die Vielzahl von Sicherheitsvorrichtungen (14, 14a, 14b), die innerhalb der Gebäudefläche installiert sind, in eine Vielzahl von Gruppen aufgeteilt sind, wobei jeder Gruppe ein unterschiedlicher Benutzer zugewiesen ist, wobei jeder Benutzer einer unterschiedlichen mobilen Vorrichtung (23, 24) zum Konfigurieren der Sicherheitsvorrichtungen (14, 14a, 14b) innerhalb ihrer zugewiesenen Gruppe zugewiesen ist, und die unterschiedlichen mobilen Vorrichtungen (23, 24) ihre gespeicherten ersten und zweiten Konfigurationsinformationen für jede der Sicherheitsvorrichtungen (14, 14a, 14b) in ihrer zugewiesenen Gruppe auf den entfernten Server (36) hochladen; und
zu ermöglichen, dass der Benutzer die Schritte des Informierens, Scannens, Konfigurierens und Speicherns für jede der Vielzahl von Sicherheitsvorrichtungen (14, 14a, 14b) in jeder der Vielzahl von Gruppen durchführt, bevor der entfernte Server (36) verfügbar ist.

## Revendications

1. Procédé pour configurer une pluralité de dispositifs de sécurité (14, 14a, 14b) d'un système de contrôle de bâtiment (10) en utilisant une application exécutée sur un dispositif mobile (23, 24), le procédé comprenant :
l'utilisation de l'application sur le dispositif mobile (23, 24) pour accéder à un plan d'étage (16, 132) correspondant à un espace de bâtiment présentant la pluralité de dispositifs de sécurité (14, 14a, 14b) chacun installé au niveau d'un emplacement physique correspondant dans l'espace de bâtiment, la pluralité de dispositifs de sécurité (14, 14a, 14b) attendant une configuration ;
l'autorisation pour un utilisateur d'informer l'application d'une position relative de chacun de la pluralité de dispositifs de sécurité (14, 14a, 14b) dans l'espace de bâtiment en plaçant une icône pour chacun de la pluralité de dispositifs de sécurité (14, 14a, 14b) au niveau d'un emplacement sur le plan d'étage (16, 132) qui correspond à l'emplacement physique du dispositif de sécurité (14, 14a, 14b) correspondant dans l'espace de bâtiment ;
l'autorisation pour l'utilisateur de balayer un code balayable (22) fixé par rapport à un dispositif de sécurité (14, 14a, 14b) particulier de la pluralité de dispositifs de sécurité (14, 14a, 14b) en utilisant le dispositif mobile (23, 24), le code balayable (22) codant des premières informations de configuration pour le dispositif de sécurité (14, 14a, 14b) particulier ;
l'autorisation pour l'utilisateur de configurer le dispositif de sécurité (14, 14a, 14b) particulier en saisissant des deuxièmes informations de configuration pour le dispositif de sécurité (14, 14a, 14b) particulier par l'intermédiaire d'un ou plusieurs écrans qui sont affichés par l'application exécutée sur le dispositif mobile (23, 24), dans lequel les deuxièmes informations de configuration incluent des options supplémentaires pour configurer le dispositif de sécurité (14, 14a, 14b) particulier en plus des premières informations de configuration et de l'emplacement du dispositif de sécurité (14, 14a, 14b) particulier sur le plan d'étage (16, 132) ;
l'enregistrement des premières et deuxièmes informations de configuration pour le dispositif de sécurité (14, 14a, 14b) particulier dans une mémoire (30) du dispositif mobile (23, 24) ;
la répétition des étapes de balayage, de réception et d'enregistrement pour chacun de la pluralité de dispositifs de sécurité (14, 14a, 14b) ;
le téléversement des premières et deuxièmes informations de configuration enregistrées pour chacun de la pluralité de dispositifs de sécurité (14, 14a, 14b) vers un serveur à distance (36) ;
dans lequel la pluralité de dispositifs de sécurité (14, 14a, 14b) installés dans l'espace de bâtiment sont divisés en une pluralité de groupes, avec un utilisateur différent assigné à chaque groupe, dans lequel un dispositif mobile (23, 24) différent est assigné à chaque utilisateur pour configurer les dispositifs de sécurité (14, 14a, 14b) dans leur groupe assigné, et les différents dispositifs mobiles (23, 24) téléversant leurs premières et deuxièmes informations de configuration enregistrées pour chacun des dispositifs de sécurité (14, 14a, 14b) dans leur groupe assigné au serveur à distance (36) ;
l'autorisation pour l'utilisateur de réaliser les étapes de balayage, de configuration et d'enregistrement pour chacun de la pluralité de dispositifs de sécurité (14, 14a, 14b) avant que le serveur à distance (36) ne soit disponible pour recevoir des premières et deuxièmes informations de configuration ; et
le fonctionnement du système de contrôle de bâtiment (10) en utilisant les premières et deuxièmes informations de configuration téléversées.

2. Procédé selon la revendication 1, dans lequel l'utilisation de l'application sur le dispositif mobile (23, 24) pour accéder à un plan d'étage (16, 132) comprend le balayage ou la prise d'une photo d'une copie disponible du plan d'étage (16, 132) en utilisant un appareil photographique (28) du dispositif mobile (23, 24).

3. Procédé selon la revendication 1, dans lequel l'utilisation de l'application sur le dispositif mobile (23, 24) pour accéder à un plan d'étage (16, 132) comprend le téléchargement du plan d'étage (16, 132) à partir d'une source à distance.

4. Procédé selon la revendication 1, dans lequel le plan d'étage (16, 132) est programmé dans l'application exécutée sur le dispositif mobile (23, 24).

5. Procédé selon la revendication 1, dans lequel l'utilisation de l'application sur le dispositif mobile (23, 24) pour accéder à un plan d'étage (16, 132) comprend en outre l'accès à une liste (196) de dispositifs de sécurité (14, 14a, 14b) installés dans l'espace de bâtiment ainsi que d'icônes correspondantes pour chacun des dispositifs de sécurité (14, 14a, 14b) inclus dans la liste (196) de dispositifs de sécurité (14, 14a, 14b).

6. Procédé selon la revendication 5, dans lequel l'information de l'application de la position relative de chacun de la pluralité de dispositifs de sécurité (14, 14a, 14b) dans l'espace de bâtiment comprend le glissement de chaque icône à partir de la liste (196) de dispositifs de sécurité (14, 14a, 14b) et le dépôt de l'icône au niveau d'un emplacement sur le plan d'étage (16, 132) qui correspond à l'emplacement physique du dispositif de sécurité (14, 14a, 14b) correspondant dans l'espace de bâtiment.

7. Procédé selon la revendication 1, dans lequel l'autorisation pour l'utilisateur de balayer le code balayable (22) fixé par rapport au dispositif de sécurité (14, 14a, 14b) particulier comprend en outre le retrait d'un couvercle du dispositif de sécurité (14, 14a, 14b) particulier afin d'accéder au code balayable (22).

8. Procédé selon la revendication 1, dans lequel le code balayable (22) comprend un code-barres (22) ou un code QR (22) qui est balayable par un appareil photographique (28) du dispositif mobile (23, 24).

9. Procédé selon la revendication 1, dans lequel les premières informations de configuration codées par le code balayable (22) comprennent un identifiant unique qui identifie de manière unique le dispositif de sécurité (14, 14a, 14b) particulier.

10. Procédé selon la revendication 1, dans lequel les premières informations de configuration codées par le code balayable (22) comprennent un ou plusieurs d'une adresse de contrôle d'accès au média (MAC) pour le dispositif de sécurité (14, 14a, 14b) particulier et d'informations de modèle pour le dispositif de sécurité (14, 14a, 14b) particulier.

11. Procédé selon la revendication 10, dans lequel les deuxièmes informations de configuration comprennent une adresse de réseau pour le dispositif de sécurité (14, 14a, 14b) particulier.

12. Procédé selon la revendication 1, dans lequel l'autorisation pour l'utilisateur de configurer le dispositif de sécurité (14, 14a, 14b) particulier en saisissant les deuxièmes informations de configuration pour le dispositif de sécurité (14, 14a, 14b) particulier comprend :
la sollicitation, auprès de l'utilisateur, des deuxièmes informations de configuration nécessaires pour configurer le dispositif de sécurité (14, 14a, 14b) particulier par l'intermédiaire d'un ou plusieurs écrans qui sont affichés par l'application exécutée sur le dispositif mobile (23, 24) ; et
l'acceptation, en provenance de l'utilisateur, d'au moins une partie des deuxièmes informations de configuration sollicitées par l'intermédiaire d'un ou plusieurs écrans qui sont affichés par l'application exécutée sur le dispositif mobile (23, 24).

13. Support de stockage non transitoire lisible par ordinateur, sur lequel sont stockées des instructions qui, lorsqu'elles sont exécutées par un ou plusieurs processeurs (34) d'un dispositif mobile (23, 24), amènent le dispositif mobile (23, 24) à :
accéder à un plan d'étage (16, 132) correspondant à un espace de bâtiment présentant une pluralité de dispositifs de sécurité (14, 14a, 14b) installés dans celui-ci, la pluralité de dispositifs de sécurité (14, 14a, 14b) attendant une configuration ;
autoriser un utilisateur à informer l'application d'une position relative de chacun de la pluralité de dispositifs de sécurité (14, 14a, 14b) dans l'espace de bâtiment en plaçant une icône représentant chacun de la pluralité de dispositifs de sécurité (14, 14a, 14b) à une position appropriée dans le plan d'étage (16, 132) ;
autoriser l'utilisateur à balayer un code balayable (22) disposé par rapport à un dispositif de sécurité (14, 14a, 14b) particulier de la pluralité de dispositifs de sécurité (14, 14a, 14b), le code balayable (22) codant des premières informations de configuration pour le dispositif de sécurité (14, 14a, 14b) particulier ;
autoriser l'utilisateur à configurer le dispositif de sécurité (14, 14a, 14b) identifié en saisissant des deuxièmes informations de configuration sur un ou plusieurs écrans qui sont affichés par l'application exécutée sur le dispositif mobile (23, 24), dans lequel les deuxièmes informations de configuration incluent des options supplémentaires pour le dispositif de sécurité (14, 14a, 14b) identifié en plus des premières informations de configuration et de la position relative du dispositif de sécurité (14, 14a, 14b) identifié dans l'espace de bâtiment ;
enregistrer les premières et deuxièmes informations de configuration pour le dispositif de sécurité (14, 14a, 14b) particulier dans une mémoire (30) du dispositif mobile (23, 24) ;
répéter les étapes de balayage, de configuration et d'enregistrement pour chacun de la pluralité de dispositifs de sécurité (14, 14a, 14b) ;
téléverser les configurations enregistrées pour chacun de la pluralité de dispositifs de sécurité (14, 14a, 14b) vers un serveur à distance (36) ;
dans lequel la pluralité de dispositifs de sécurité (14, 14a, 14b) installés dans l'espace de bâtiment sont divisés en une pluralité de groupes, avec un utilisateur différent assigné à chaque groupe, dans lequel un différent dispositif mobile (23, 24) est assigné à chaque utilisateur pour configurer les dispositifs de sécurité (14, 14a, 14b) dans leur groupe assigné, et les différents dispositifs mobiles (23, 24) téléversant leurs premières et deuxièmes informations de configuration enregistrées pour chacun des dispositifs de sécurité (14, 14a, 14b) dans leur groupe assigné au serveur à distance (36) ; et
autoriser l'utilisateur à réaliser les étapes d'information, de balayage, de configuration et d'enregistrement pour chacun de la pluralité de dispositifs de sécurité (14, 14a, 14b) dans chacun de la pluralité de groupes avant que le serveur à distance (36) ne soit disponible.
